# EUROPEAN PATENT SPECIFICATION

(11) **EP 2 624 469 B1**
(45) Date of publication and mention of the grant of the patent: **19.11.2014**
(21) Application number: 12153590.0
(22) Date of filing: 02.02.2012
(51) Int. Cl.: H04B 3/54

(54) **Transmitting electrical power and data**
Übertragung von elektrischem Strom und Daten
Transmission d'alimentation électrique et de données

(43) Date of publication of application: 07.08.2013
(73) Proprietor: Vetco Gray Controls Limited, Bristol BS48 1BS (GB)
(72) Inventor: Puchianu, Silviu, Nailsea, Bristol BS48 1BS (GB); Smart, Hilton, Nailsea, Bristol BS48 1BS (GB); Morley, Graham, Nailsea, Bristol BS48 1BS (GB); Davis, Julian, Nailsea, Bristol BS48 1BS (GB)
(74) Representative: Emerson, Peter James

(56) References cited:
- GB-A- 2 335 334
- GB-A- 2 401 295
- GB-A- 2 416 097
- US-A- 4 689 620
- US-A1- 2003 156 013

## Description

### Field of the Invention

This invention relates to transmitting electrical power and data.

### Background of the Invention

One of the enabling techniques used in offshore production control systems for hydrocarbon extraction wells, to transmit control and instrumentation signals between topside equipment and subsurface equipment installed on the seabed, is the use of communications-on-power (COP) where communication signals are superimposed on an electrical power signal and transmitted simultaneously with the power signal along a power transmission line in an umbilical cable.

This method is employed to reduce the number of electrical lines needed within the umbilical cable, which provides the main interface between topside and subsurface equipment for hydraulic and electrical power. Using COP eliminates the need for separate power and communication lines within the umbilical cable, thereby reducing its overall cost.

However, this technique does have some inherent disadvantages as follows.

At the subsea equipment level there is a need to utilise bulky equipment, such as communications blocking filters and diplexers, to separate and retrieve the communication signals from the power signal and this process can result in electrical noise and transients being generated. These subsea components also consume electrical power

The quality of the electrical power generated topside and transmitted through the umbilical cable may be poor and contain electrical noise and harmonics of the typically 50/60Hz electrical power frequency and these may interfere with the lower power communication signals which are superimposed on the electrical power signal.

Sudden voltage transients (such as those caused by switching surges or sudden changes to the electrical load) can interfere with the high frequency communication signals.

Another technique is so-called communications-and-power (CAP) where power and communication signals are sent on different lines.

In the case of subsea electronics modules (SEMs), there is a need for isolated communication of data between them and remote subsea sensors that are not equipped with their own resident power supplies. Isolated data transmission generally requires that both sides have their own separated power supplies or that power from one side is also supplied to the other side.

### Summary of the Invention

According to this invention from one aspect, there is provided a system for transmitting electrical power and data between a first side and a second side, comprising:
at the first side, a source of electrical power and first data transmitting and receiving means;
at the second side, second data transmitting and receiving means and electrical power receiving means for supplying electrical power from said source to the second data transmitting and receiving means;
a first transmission line between the first side and the second side;
a second transmission line between the first side and the second side; and
means for controlling the system so that it is operable in each of:
   a first mode, in which data is transmitted from said first transmitting and receiving means to said second data transmitting and receiving means via said first transmission line and electrical power is transmitted from said power source to said power receiving means via said second transmission line; and
   a second mode, in which data is sent from said second data transmitting and receiving means to said first data transmitting and receiving means via said second transmission line and electrical power is transmitted from said power source to said power receiving means via said first transmission line.

Said controlling means could be such that the system is also operable in a mode in which electrical power is transmitted from said power source to said power receiving means via said first and second transmission lines and no data is transmitted from said first and second data transmitting and receiving means.

Said controlling means could be such that the system is also operable in a mode in which data is transmitted from said first data transmitting and receiving means to said second data transmitting and receiving means via said first transmission line and data is transmitted from said second data transmitting and receiving means to said first data transmitting and receiving means via said second transmission line and no power is transmitted from said power source to said power receiving means.

Said power receiving means could comprise first such means coupled with said first transmission line and second such means coupled with said second transmission line, said second power receiving means receiving power from said source in said first mode and said first power receiving means receiving power from said source in said second mode.

Typically, said power source comprises an AC power source, the or each power receiving means comprising means for converting AC electrical power to DC electrical power. In this case, the or each power receiving means typically comprises means for storing DC power from the converting means for supplying power to said second data transmitting and receiving means. Typically, the system includes a first transformer in said first transmission line and a second transformer in said second transmission line, for galvanically isolating said sides.

Said second data transmitting and receiving means could comprise a sensor arrangement. In this case, said sensor arrangement could comprise at least one sensor for parameter monitoring and at least one sensor for monitoring the or each power receiving means. Said first side could comprise a subsea electronics module, said second side comprising a subsea sensor side.

According to this invention from another aspect, there is provided a method for transmitting electrical power and data between a first side and a second side, comprising:
at the first side, providing a source of electrical power and first data transmitting and receiving means;
at the second side, providing second data transmitting and receiving means and electrical power receiving means for supplying electrical power from said source to the second data transmitting and receiving means;
providing a first transmission line between the first side and the second side;
providing a second transmission line between the first side and the second side; and
controlling operation by selecting one of:
   a first mode, in which data is transmitted from said first transmitting and receiving means to said second data transmitting and receiving means via said first transmission line and electrical power is transmitted from said power source to said power receiving means via said second transmission line; and
   a second mode, in which data is sent from said second data transmitting and receiving means to said first data transmitting and receiving means via said second transmission line and electrical power is transmitted from said power source to said power receiving means via said first transmission line.

### Brief Description of the Drawings

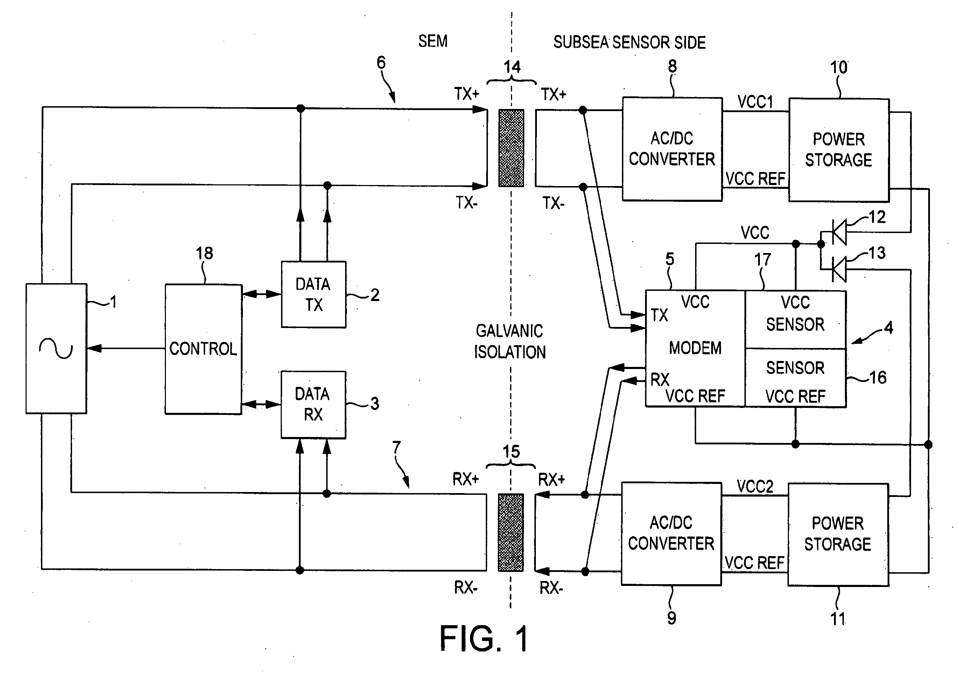

Fig. 1 is a schematic diagram of a system according to an embodiment of the invention;

### Detailed Description of the Invention.

The embodiment to be described enables electrical power to be sent from a SEM in a subsea well control system (for example a well control system for a subsea hydrocarbon extraction well) to provide power for a subsea sensor arrangement; data to be sent from the SEM to the sensor arrangement; and data to be sent from the sensor arrangement to the SEM.

Referring to Fig. 1, in a SEM, there is an alternating electrical current (AC) power supply 1 and first data transmitting and receiving means comprising data transmitting (TX) means 2 and data receiving (RX) means 3. At a second, subsea side, second data transmitting and receiving means is provided in the form of sensor arrangement 4 and a modem 5 for transmitting (TX) data to receiving means 4 and receiving data from transmitting means 2.

The SEM can communicate with the modem 5 and subsea sensor arrangement 4 via a first transmission line 6 and a second transmission line 7. The transmission line 6 is coupled to a subsea alternating current to direct current (AC/DC) converter 8 and the transmission line 7 is coupled to a subsea AC/DC converter 9. Each of converters 8 and 9 could, for example, comprise a bridge rectifier and filter. Also, transmission line 6 is connected to modem 5 for transmitting (TX) data to it and the sensor arrangement 4 and transmission line 7 is connected to modem 5 for receiving (RX) data from it and the sensor arrangement 4.

Also, converter 8 is connected to a subsea electrical power storage device 10 and converter 9 is connected to a subsea electrical power storage device 11. Each of storage devices 10 and 11 could, for example, comprise at least one capacitor, at least one so-called "supercapacitor" or a rechargeable battery. For supplying electrical power to the modem 5 and sensor arrangement 4, storage device 10 is connected across them via a diode 12 and storage device 11 is connected across them via a diode 13.

For providing galvanic isolation between data transmission and data reception, transmission line 6 includes a transformer 14 in its path between the SEM side and the subsea sensor arrangement side and transmission line 7 includes a transformer 15 in its path between the subsea sensor arrangement side and the SEM side.

The sensor arrangement 4 comprises at least one sensor 16 for monitoring a parameter such as pressure or temperature and at least one sensor 17 for monitoring the voltages provided by storage devices 10 and 11.

Under the control of electronic control means 18 in the SEM, the above system is operable in each of the following modes.
1. A mode in which transmission line 6 is used so that the modem 5 receives data from data transmitting means 2 of the SEM for sensor arrangement 4 and the transmission line 7 is used to supply AC power to the subsea sensor arrangement 4 and modem 5, derived power from converter 9 being stored in storage device 11 for supplying power to them.
2. A mode in which transmission line 7 is used to transmit data from the sensor arrangement 4 via the modem 5 to the data receiving means 3 of the SEM, the transmission line 6 being used to supply AC power to the subsea sensor arrangement 4 and modem 5, derived power from converter 8 being stored in storage device 10 for supplying power to them.
3. A mode in which there is no data transmission between the SEM and the subsea sensor arrangement side in either direction, but both transmission lines 6 and 7 are used to supply AC power to the converters 8 and 9, power derived from them being stored in storage devices 10 and 11 until the at least one sensor 17 senses that the voltages provided by them are above a threshold, in response to which a message from the modem 5 to data receiving means 4 causes the supply of AC power to be stopped.
4. A mode in which both transmission lines 6 and 7 are used simultaneously for data transmission (data from the data transmitting means 2 to the modem 5 being sent on transmission line 6 and data from the modem 5 to the data receiving means 3 being sent on transmission line 7), neither of lines 6 and 7 being used for transmitting AC power. When the at least one sensor 17 senses that the stored voltage in storage device 10 and/or device 11 drops below a threshold, a message from modem 5 to data receiving means 3 causes data transmission to stop and the transmission of AC power to start via lines 6 and 7 until the voltage from each of devices 10 and 11 is above the threshold.

## Claims

1. A system for transmitting electrical power and data between a first side and a second side, comprising:
at the first side, a source (1) of electrical power and first data transmitting and receiving means (2, 3);
at the second side, second data transmitting and receiving means (4, 5) and electrical power receiving means (8, 10, 9, 11) for supplying electrical power from said source to the second data transmitting and receiving means;
a first transmission line (6) between the first side and the second side;
a second transmission line (7) between the first side and the second side; and
means (18) for controlling the system so that it is operable in each of:
a first mode, in which data is transmitted from said first transmitting and receiving means to said second data transmitting and receiving means via said first transmission line and electrical power is transmitted from said power source to said power receiving means via said second transmission line; and
a second mode, in which data is sent from said second data transmitting and receiving means to said first data transmitting and receiving means via said second transmission line and electrical power is transmitted from said power source to said receiving means via said first transmission line.

2. A system according to claim 1, wherein said controlling means (18) is such that the system is also operable in a mode in which electrical power is transmitted from said power source (1) to said power receiving means (8, 10, 9, 11) via said first and second transmission lines (6, 7) and no data is transmitted from said first and second data transmitting and receiving means (2, 3).

3. A system according to claim 1 or 2, wherein said controlling means (18) is such that the system is also operable in a mode in which data is transmitted from said first data transmitting and receiving means (2, 3) to said second data transmitting and receiving means (4, 5) via said first transmission line (6) and data is transmitted from said second data transmitting and receiving means (4, 5) to said first data transmitting and receiving means via said second transmission line (7) and no power is transmitted from said power source to said power receiving means (8, 10, 9, 11).

4. A system according to any preceding claim, wherein said power receiving means (8, 10, 9, 11) comprises first such means (8, 10) coupled with said first transmission line (6) and second such means (9, 11) coupled with said second transmission line (7), said second power receiving means receiving power from said source (1) in said first mode and said first power receiving means receiving power from said source in said second mode.

5. A system according to any preceding claim, wherein said power source (1) comprises an AC power source, the or each power receiving means (8, 10 or 9, 11) comprising means (8 or 9) for converting AC electrical power to DC electrical power.

6. A system according to claim 5, wherein the or each power receiving means (8, 10 or 9, 11) comprises means (10 or 11) for storing DC power from the converting means (8 or 9) for supplying power to said second data transmitting and receiving means (4, 5).

7. A system according to claim 5 or 6, including a first transformer (14) in said first transmission line(6) and a second transformer (15) in said second transmission line (7), for galvanically isolating said sides.

8. A system according to any preceding claim, wherein said second data transmitting and receiving means (4, 5) comprises a sensor arrangement (4).

9. A system according to claim 8, wherein said sensor arrangement (4) comprises at least one sensor (17) for parameter monitoring and at least one sensor (16) for monitoring the or each power receiving means (8, 10 or 9, 11).

10. A system according to claim 8 or 9, wherein said first side comprises a subsea electronics module (SEM) and said second side comprises a subsea sensor side.

11. A method for transmitting electrical power and data between a first side and a second side, comprising:
at the first side, providing a source (1) of electrical power and first data transmitting and receiving means (2, 3);
at the second side, providing second data transmitting and receiving means (4, 5) and electrical power receiving means (8, 10, 9, 11) for supplying electrical power from said source to the second data transmitting and receiving means;
providing a first transmission line (6) between the first side and the second side;
providing a second transmission line (7) between the first side and the second side; and
controlling operation by selecting one of:
a first mode, in which data is transmitted from said first transmitting and receiving means to said second data transmitting and receiving means via said first transmission line and electrical power is transmitted from said power source to said power receiving means via said second transmission line; and
a second mode, in which data is sent from said second data transmitting and receiving means to said first data transmitting and receiving means via said second transmission line and electrical power is transmitted from said power source to said receiving means via said first transmission line.

12. A method according to claim 11, wherein said power receiving means (8, 10, 9, 11) comprises first such means (8, 10) coupled with said first transmission line (6) and second such means (9, 11) coupled with said second transmission line (7), said second power receiving means receiving power from said source (1) in said first mode and said first power receiving means receiving power from said source in said second mode.

13. A method according to claim 11 or 12, wherein said power source (1) comprises an AC power source, the or each power receiving means (8, 10 or 9, 11) converting AC electrical power to DC electrical power.

14. A method according to claim 13, comprising storing the DC electrical power for supplying power to said second data transmitting and receiving means (4, 5).

15. A method according to claim 13 or 14, comprising providing a first transformer (14) in said first transmission line (6) and a second transformer (15) in said second transmission line (7), for galvanically isolating said sides.

16. A method according to any of claims 11 to 15, wherein said second data transmitting and receiving means (4, 5) comprises a sensor arrangement (4).

17. A method according to claim 16, wherein said sensor arrangement (4) comprises at least one sensor (16) for parameter monitoring and at least one sensor (17) for monitoring the or each power receiving means (8, 10 or 9, 11).

18. A method according to claim 16 or 17, wherein said first side comprises a subsea electronics module (SEM) and said second side comprises a subsea sensor side.

## Patentansprüche

1. System zum Übertragen von elektrischem Strom und Daten zwischen einer ersten Seite und einer zweiten Seite, Folgendes umfassend:
an der ersten Seite eine Quelle (1) für elektrischen Strom und erste Datenübertragungs- und -empfangsmittel (2, 3);
an der zweiten Seite zweite Datenübertragungs- und -empfangsmittel (4, 5) und Empfangsmittel für elektrischen Strom (8, 10, 9, 11), um elektrischen Strom von der Quelle an die zweiten Datenübertragungs- und -empfangsmittel bereitzustellen;
eine erste Übertragungsleitung (6) zwischen der ersten und der zweiten Seite;
eine zweite Übertragungsleitung (7) zwischen der ersten und der zweiten Seite; und
Mittel (18) zum Steuern des Systems, damit es funktionsfähig ist in:
einem ersten Modus, in dem Daten über die erste Übertragungsleitung von den ersten Datenübertragungs- und -empfangsmitteln an die zweiten Datenübertragungs- und -empfangsmittel übertragen werden und Strom von der Stromquelle über die zweite Übertragungsleitung an die Empfangsmittel für elektrischen Strom übertragen wird; und
einem zweiten Modus, in dem Daten über die zweite Übertragungsleitung von den zweiten Datenübertragungs- und -empfangsmitteln an die ersten Datenübertragungs- und -empfangsmittel übertragen werden und Strom von der Stromquelle über die erste Übertragungsleitung an die Empfangsmittel für elektrischen Strom übertragen wird.

2. System nach Anspruch 1, wobei die Steuermittel (18) derart gestaltet sind, dass das System auch in einem Modus bedienbar ist, in dem elektrischer Strom von der Stromquelle (1) über die erste und zweite Übertragungsleitung (6, 7) an die Empfangsmittel für elektrischen Strom (8, 10, 9, 11) übertragen wird und keine Daten von den ersten und den zweiten Datenübertragungs- und -empfangsmitteln (2, 3) übertragen werden.

3. System nach Anspruch 1 oder 2, wobei die Steuermittel (18) derart gestaltet sind, dass das System auch in einem Modus bedienbar ist, in dem Daten von den ersten Datenübertragungs- und -empfangsmitteln (2, 3) über die erste Übertragungsleitung (6) an die zweiten Datenübertragungs- und -empfangsmittel (4, 5) und Daten von den zweiten Datenübertragungs- und -empfangsmitteln (4, 5) über die zweite Übertragungsleitung (7) an die ersten Datenübertragungs- und -empfangsmittel übertragen werden und kein Strom von der Stromquelle an die Empfangsmittel für elektrischen Strom (8, 10, 9, 11) übertragen wird.

4. System nach einem der vorhergehenden Ansprüche, wobei die Empfangsmittel für elektrischen Strom (8, 10, 9, 11) erste solche Mittel (8, 10) aufweisen, die mit der ersten Übertragungsleitung (6) verbunden sind, und zweite solche Mittel (9, 11) aufweisen, die mit der zweiten Übertragungsleitung verbunden sind, wobei die zweiten Empfangsmittel für elektrischen Strom den Strom von der Quelle (1) im ersten Modus empfangen und die ersten Empfangsmittel für elektrischen Strom den Strom von der Quelle im zweiten Modus empfangen.

5. System nach einem der vorhergehenden Ansprüche, wobei die Stromquelle (1) eine Wechselstromquelle umfasst und wobei das oder alle Empfangsmittel für elektrischen Strom (8, 10 oder 9, 11) Mittel (8 oder 9) umfassen, um den Wechselstrom in Gleichstrom umzuwandeln.

6. System nach Anspruch 5, wobei das oder alle Empfangsmittel für elektrischen Strom (8, 10 oder 9, 11) Mittel (10 oder 11) umfassen, um Gleichstrom aus dem Umwandlungsmitteln (8 oder 9) zu speichern, um Strom an die zweiten Datenübertragungs- und -empfangsmittel (4, 5) bereitzustellen.

7. System nach Anspruch 5 oder 6, einschließlich eines ersten Transformators (14) in der ersten Übertragungsleitung (6) und eines zweiten Transformators (15) in der zweiten Übertragungsleitung (7), um die beiden Seiten galvanisch zu trennen.

8. System nach einem der vorhergehenden Ansprüche wobei die zweiten Datenübertragungs- und -empfangsmittel (4, 5) eine Sensoranordnung (4) umfassen.

9. System nach Anspruch 8, wobei die Sensoranordnung (4) wenigstens einen Sensor (17) zum Überwachen der Parameter und wenigstens einen Sensor (16) zum Überwachen des oder aller Empfangsmittel für elektrischen Strom (8, 10 oder 9, 11) umfasst.

10. System nach Anspruch 8 oder 9, wobei die erste Seite ein Untersee-Elektronikmodul (SEM) und die zweite Seite eine Untersee-Sensorseite umfasst.

11. Verfahren zum Übertragen von elektrischem Strom und Daten zwischen einer ersten Seite und einer zweiten Seite, Folgendes umfassend:
an der ersten Seite Bereitstellen einer Quelle (1) für elektrischen Strom und erste Datenübertragungs- und -empfangsmittel (2, 3);
an der zweiten Seite Bereitstellen zweiter Datenübertragungs- und -empfangsmittel (4, 5) sowie Empfangsmittel für elektrischen Strom (8, 10, 9, 11) zum Bereitstellen von elektrischem Strom von der Quelle zu den zweiten Datenübertragungs- und -empfangsmitteln;
Bereitstellen einer ersten Übertragungsleitung (6) zwischen der ersten und der zweiten Seite;
Bereitstellen einer zweiten Übertragungsleitung (7) zwischen der ersten und der zweiten Seite; und
Steuern des Betriebs durch Auswählen von:
einem ersten Modus, in dem Daten von den ersten Übertragungs- und -empfangsmitteln über die erste Übertragungsleitung an die zweiten Datenübertragungs- und -empfangsmittel übertragen werden und elektrischer Strom von der Stromquelle über die zweite Übertragungsleitung an die Empfangsmittel für elektrischen Strom übertragen wird; oder
einem zweiten Modus, in dem Daten von den zweiten Datenübertragungs- und -empfangsmitteln über die zweite Übertragungsleitung an die ersten Datenübertragungs- und -empfangsmittel übertragen werden und elektrischer Strom von der Stromquelle über die erste Übertragungsleitung an die Empfangsmittel für elektrischen Strom übertragen wird.

12. Verfahren nach Anspruch 11, wobei die Empfangsmittel für elektrischen Strom (8, 10, 9, 11) erste solche Mittel (8, 10) umfassen, die mit der ersten Übertragungsleitung (6) gekoppelt sind, und zweite solche Mittel (9, 11) umfassen, die mit der zweiten Übertragungsleitung (7) gekoppelt sind, wobei die zweiten Empfangsmittel für elektrischen Strom im ersten Modus elektrischen Strom von der Stromquelle (1) empfangen und die ersten Empfangsmittel für elektrischen Strom im zweiten Modus elektrischen Strom von der Stromquelle empfangen.

13. Verfahren nach Anspruch 11 oder 12, wobei die Stromquelle (1) eine Wechselstromquelle umfasst, wobei das oder alle Empfangsmittel für elektrischen Strom (8, 10 oder 9, 11) Wechselstrom in Gleichstrom umwandeln.

14. Verfahren nach Anspruch 13, umfassend das Speichern von Gleichstrom zum Bereitstellen von Strom an den zweiten Datenübertragungs- und -empfangsmitteln (4, 5).

15. Verfahren nach Anspruch 13 oder 14, umfassend das Bereitstellen eines ersten Transformators (14) in der ersten Übertragungsleitung (6) und eines zweiten Transformators (15) in der zweiten Übertragungsleitung (7), um die Seiten galvanisch zu trennen.

16. Verfahren nach einem der Ansprüche 11 bis 15, wobei die zweiten Datenübertragungs- und -empfangsmittel (4, 5) eine Sensoranordnung (4) umfassen.

17. Verfahren nach Anspruch 16, wobei die Sensoranordnung (4) wenigstens einen Sensor (16) zum Überwachen der Parameter und wenigstens einen Sensor (17) zum Überwachen des oder aller Empfangsmittel für elektrischen Strom (8, 10 oder 9, 11) umfasst.

18. Verfahren nach Anspruch 16 oder 17, wobei die erste Seite ein Untersee-Elektronikmodul (SEM) und die zweite Seite eine Untersee-Sensorseite umfasst.

## Revendications

1. Système de transmission d'énergie électrique et de données entre un premier côté et un second côté, comprenant :
au niveau du premier côté, une source (1) d'énergie électrique et un premier moyen de transmission et de réception de données (2, 3) ;
au niveau du second côté, un second moyen de transmission et de réception de données (4, 5) et un moyen de réception d'énergie électrique (8, 10, 9, 11) pour fournir l'énergie électrique de ladite source au second moyen de transmission et de réception de données ;
une première ligne de transmission (6) entre le premier côté et le second côté ;
une seconde ligne de transmission (7) entre le premier côté et le second côté ; et
un moyen (18) de commande du système pour qu'il soit opérationnel dans chacun de :
un premier mode, dans lequel des données sont transmises dudit premier moyen de transmission et de réception audit second moyen de transmission et de réception de données via ladite première ligne de transmission et l'énergie électrique est transmise de ladite source d'énergie audit moyen de réception d'énergie via ladite seconde ligne de transmission ; et
un second mode, dans lequel des données sont envoyées dudit second moyen de transmission et de réception de données audit premier moyen de transmission et de réception de données via ladite seconde ligne de transmission et l'énergie électrique est transmise de ladite source d'énergie audit moyen de réception via ladite première ligne de transmission.

2. Système selon la revendication 1, dans lequel ledit moyen de commande (18) est tel que le système soit également opérationnel dans un mode dans lequel l'énergie électrique est transmise de ladite source d'énergie (1) audit moyen de réception d'énergie (8, 10, 9, 11) via lesdites première et seconde lignes de transmission (6, 7) et aucune donnée n'est transmise desdits premier et second moyens de transmission et de réception de données (2, 3).

3. Système selon la revendication 1 ou 2, dans lequel ledit moyen de commande (18) est tel que le système soit également opérationnel dans un mode dans lequel les données sont transmises dudit premier moyen de transmission et de réception de données (2, 3) audit second moyen de transmission et de réception de données (4, 5) via ladite première ligne de transmission (6) et les données sont transmises dudit second moyen de transmission et de réception de données (4, 5) audit premier moyen de transmission et de réception de données via ladite seconde ligne de transmission (7) et aucune énergie n'est transmise de ladite source d'énergie audit moyen de réception d'énergie (8, 10, 9, 11).

4. Système selon l'une quelconque des revendications précédentes, dans lequel ledit moyen de réception d'énergie (8, 10, 9, 11) comprend un tel premier moyen (8, 10) couplé à ladite première ligne de transmission (6) et un tel second moyen (9, 11) couplé à ladite seconde ligne de transmission (7), ledit second moyen de réception d'énergie recevant l'énergie de ladite source (1) dans ledit premier mode et ledit premier moyen de réception d'énergie recevant l'énergie de ladite source dans ledit second mode.

5. Système selon l'une quelconque des revendications précédentes, dans lequel ladite source d'énergie (1) comprend une source d'énergie alternative, le ou chaque moyen de réception d'énergie (8, 10 ou 9, 11) comprenant un moyen (8 ou 9) de conversion d'énergie électrique alternative en énergie électrique continue.

6. Système selon la revendication 5, dans lequel le ou chaque moyen de réception d'énergie (8, 10 ou 9, 11) comprend un moyen (10 ou 11) de stockage d'énergie continue provenant du moyen de conversion (8 ou 9) pour fournir l'énergie audit second moyen de transmission et de réception de données (4, 5).

7. Système selon la revendication 5 ou 6, comprenant un premier transformateur (14) dans ladite première ligne de transmission (6) et un second transformateur (15) dans ladite seconde ligne de transmission (7), pour isoler galvaniquement lesdits côtés.

8. Système selon l'une quelconque des revendications précédentes, dans lequel ledit second moyen de transmission et de réception de données (4, 5) comprend un agencement de capteur (4).

9. Système selon la revendication 8, dans lequel ledit agencement de capteur (4) comprend au moins un capteur (17) pour la surveillance de paramètres et au moins un capteur (16) pour la surveillance du ou de chaque moyen de réception d'énergie (8, 10 ou 9, 11).

10. Système selon la revendication 8 ou 9, dans lequel ledit premier côté comprend un module électronique sous-marin (SEM) et ledit second côté comprend un côté de capteur sous-marin.

11. Procédé de transmission d'énergie électrique et de données entre un premier côté et un second côté, comprenant :
au niveau du premier côté, la fourniture d'une source (1) d'énergie électrique et d'un premier moyen de transmission et de réception de données (2, 3) ;
au niveau du second côté, la fourniture du second moyen de transmission et de réception de données (4, 5) et du moyen de réception d'énergie électrique (8, 10, 9, 11) pour fournir de l'énergie électrique de ladite source au second moyen de transmission et de réception de données ;
la fourniture d'une première ligne de transmission (6) entre le premier côté et le second côté ;
la fourniture d'une seconde ligne de transmission (7) entre le premier côté et le second côté ; et
la commande de l'opération en sélectionnant l'un :
d'un premier mode, dans lequel les données sont transmises dudit premier moyen de transmission et de réception audit second moyen de transmission et de réception de données via ladite première ligne de transmission et l'énergie électrique est transmise de ladite source d'énergie audit moyen de réception d'énergie via ladite seconde ligne de transmission ; et
d'un second mode, dans lequel les données sont envoyées dudit second moyen de transmission et de réception de données audit premier moyen de transmission et de réception de données via ladite seconde ligne de transmission et l'énergie électrique est transmise de ladite source d'énergie audit moyen de réception via ladite première ligne de transmission.

12. Procédé selon la revendication 11, dans lequel ledit moyen de réception d'énergie (8, 10, 9, 11) comprend un tel premier moyen (8, 10) couplé à ladite première ligne de transmission (6) et un tel second moyen (9, 11) couplé à ladite seconde ligne de transmission (7), ledit second moyen de réception d'énergie recevant l'énergie en provenance de ladite source (1) dans ledit premier mode et ledit premier moyen de réception d'énergie recevant l'énergie en provenance de ladite source dans ledit second mode.

13. Procédé selon la revendication 11 ou 12, dans lequel ladite source d'énergie (1) comprend une source d'énergie alternative, le ou chaque moyen de réception d'énergie (8, 10 ou 9, 11) convertissant l'énergie électrique alternative en énergie électrique continue.

14. Procédé selon la revendication 13, comprenant le stockage de l'énergie électrique continue pour fournir de l'énergie audit second moyen de transmission et de réception de données (4, 5).

15. Procédé selon la revendication 13 ou 14, comprenant la fourniture d'un premier transformateur (14) dans ladite première ligne de transmission (6) et d'un second transformateur (15) dans ladite seconde ligne de transmission (7), pour isoler galvaniquement lesdits côtés.

16. Procédé selon l'une quelconque des revendications 11 à 15, dans lequel ledit second moyen de transmission et de réception de données (4, 5) comprend un agencement de capteur (4).

17. Procédé selon la revendication 16, dans lequel ledit agencement de capteur (4) comprend au moins un capteur (16) pour la surveillance de paramètres et au moins un capteur (17) pour la surveillance du ou de chaque moyen de réception d'énergie (8, 10 ou 9, 11).

18. Procédé selon la revendication 16 ou 17, dans lequel ledit premier côté comprend un module électronique sous-marin (SEM) et ledit second côté comprend un côté de capteur sous-marin.
